# EUROPÄISCHE PATENTSCHRIFT

(11) **EP 3 219 582 B1**
(45) Veröffentlichungstag und Bekanntmachung des Hinweises auf die Patenterteilung: **20.02.2019**
(21) Anmeldenummer: 17159795.8
(22) Anmeldetag: 08.03.2017
(51) Int. Cl.: B62D 15/02

(54) **VERFAHREN ZUM ZUMINDEST SEMI-AUTONOMEN EINPARKEN EINES KRAFTFAHRZEUGS, FAHRERASSISTENZSYSTEM SOWIE KRAFTFAHRZEUG**
METHOD FOR AT LEAST SEMI AUTOMATIC PARKING OF A MOTOR VEHICLE, DRIVER ASSISTANCE SYSTEM AND MOTOR VEHICLE
PROCÉDÉ DESTINÉ AU MOINS AU STATIONNEMENT SEMI-AUTOMATIQUE D'UN VÉHICULE AUTOMOBILE, SYSTÈME D'AIDE AU CONDUCTEUR ET VÉHICULE AUTOMOBILE

(30) Priorität: 14.03.2016 DE 102016104574
(43) Veröffentlichungstag der Anmeldung: 20.09.2017
(73) Patentinhaber: Valeo Schalter und Sensoren GmbH, 74321 Bietigheim-Bissingen (DE)
(72) Erfinder: Ayyappan, Thirumalai Kumarasamy, 74321 Bietigheim-Bissingen (DE)

(56) Entgegenhaltungen:
- EP-A1- 2 253 509
- EP-A1- 2 327 574
- DE-A1-102007 061 234
- DE-A1-102013 220 931

## Beschreibung

Die Erfindung betrifft ein Verfahren zum zumindest semi-autonomen Einparken eines Kraftfahrzeugs in eine Parklücke aufweisend einen ersten Bereich und einen gegenüber dem ersten Bereich erhöhten zweiten Bereich, wobei bei dem Verfahren zur Überwindung eines Übergangs zwischen dem ersten und dem zweiten Bereich durch zumindest ein Rad des Kraftfahrzeugs während des Einparkens ein Drehmoment auf das zumindest eine Rad übertragen wird. Die Erfindung betrifft außerdem ein Fahrerassistenzsystem sowie ein Kraftfahrzeug.

Es ist bereits aus dem Stand der Technik bekannt, Kraftfahrzeuge zumindest semi-autonom zu manövrieren, um sie beispielsweise in eine Parklücke einzuparken. Beim semi-autonom Manövrieren übernimmt ein Fahrerassistenzsystem des Kraftfahrzeugs eine Lenkung des Kraftfahrzeugs, während ein Fahrer des Kraftfahrzeugs das Gaspedal sowie die Bremse des Kraftfahrzeugs betätigt. Beim autonomen beziehungsweise vollautonomen Manövrieren betätigt das Fahrerassistenzsystem zusätzlich zu der Lenkung auch das Gaspedal und die Bremse, sodass das Kraftfahrzeug automatisch beschleunigt und abgebremst wird. Mittels eines solchen Fahrerassistenzsystems kann das Kraftfahrzeug beispielsweise zumindest semi-autonom eingeparkt werden. Dazu weisen solche Fahrerassistenzsysteme üblicherweise Sensoren auf, welche Parklücken beziehungsweise freie Stellplätze in einem Umgebungsbereich des Kraftfahrzeugs erkennen und vermessen können.

Dabei ist es auch bekannt, einen Fahrer beim Einparken in eine Parklücke zu unterstützen, welche einen ersten Bereich und einen gegenüber dem ersten Bereich erhöhten zweiten Bereich aufweist. Bei einer solchen Parklücke kann der erste Bereich beispielsweise auf einem Niveau einer Fahrbahn des Kraftfahrzeugs liegen und der zweite Bereich durch eine Stufe ausgebildet sein. Ein Übergang zwischen diesem ersten Bereich und dem zweiten Bereich kann beispielsweise durch eine Bordsteinkante beziehungsweise eine Randsteinkante ausgebildet sein. Dieser Übergang soll während des Einparkens von zumindest einem Rad des Kraftfahrzeugs überwunden werden. Dazu wird ein Drehmoment auf das zumindest eine Rad des Kraftfahrzeugs übertragen.

Dazu ist in der DE 10 2013 210 672 A1 beispielsweise ein Parkassistenzsystem für ein Kraftfahrzeug beschrieben, welches einen Geschwindigkeitsregler mit einem I-Anteil zur Überwindung eines Bodenhindernisses aufweist. Dabei wird im Zusammenhang mit einer durch das Drehmoment hervorgerufenen Reduktion einer Ist-Geschwindigkeit gegenüber einer Soll-Geschwindigkeit der I-Anteil aktiviert, sodass aufgrund der Integration der Regelabweichung ein derart hohes Antriebsmoment hervorgerufen wird, dass das Kraftfahrzeug das Bodenhindernis überwindet.

EP 2 327 574 A1 ist als nächstliegender Stand der Technik nach dem Oberbegriff des Anspruchs 1 zu sehen und offenbart ein Verfahren zur Unterstützung eines Fahrers eines Fahrzeugs bei einem Fahrmanöver zur Überwindung eines Hindernisses mit einer geringen Geschwindigkeit, wobei das Hindernis eine Höhe aufweist, die von dem Fahrzeug überwunden werden kann.
Es ist Aufgabe der vorliegenden Erfindung, eine Lösung bereitzustellen, wie ein Kraftfahrzeug schnell und zuverlässig in eine Parklücke aufweisend zwei Bereiche mit unterschiedlichen Höhenniveaus zumindest semi-autonom eingeparkt werden kann.
Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausführungsformen der Erfindung sind Gegenstand der abhängigen Patentansprüche, der Beschreibung und der Figuren.
Bei einem erfindungsgemäßen Verfahren zum zumindest semi-autonomen Einparken eines Kraftfahrzeugs in eine Parklücke aufweisend einen ersten Bereich und einen gegenüber dem ersten Bereich erhöhten zweiten Bereich wird zur Überwindung eines Übergangs zwischen dem ersten und dem zweiten Bereich durch zumindest ein Rad des Kraftfahrzeugs während des Einparkens ein Drehmoment auf das zumindest eine Rad übertragen. Darüber hinaus wird das für die Überwindung des Übergangs erforderliche Drehmoment in Abhängigkeit von zumindest einem die Parklücke und/oder das Kraftfahrzeug charakterisierenden Parameter vor einem Beginn der Überwindung vorherbestimmt, wobei vorgegebenen Werten des zumindest einen Parameters jeweilige Gewichtungsfaktoren zugeordnet werden, wobei einer der Gewichtungsfaktoren in Abhängigkeit von dem bestimmten Wert des zumindest einen Parameters ausgewählt wird, ein vorgegebenes Standarddrehmoment mit dem ausgewählten Gewichtungsfaktor gewichtet wird und das gewichtete Standarddrehmoment als das für den Überwindungsvorgang erforderliche Drehmoment vorherbestimmt wird.
Mittels des Verfahrens kann ein Fahrerassistenzsystem realisiert werden, durch welches das Kraftfahrzeug zumindest semi-autonom in die Parklücke eingeparkt werden kann.

Dies bedeutet, dass das Kraftfahrzeug semi-autonom oder autonom in die Parklücke eingeparkt wird. Das Kraftfahrzeug kann dabei sowohl in eine als eine Querparklücke ausgebildete Parklücke als auch in eine als Längsparklücke ausgebildete Parklücke eingeparkt werden. Die Parklücke kann beispielsweise anhand von Sensordaten einer fahrzeugseitigen Sensoreinrichtung erkannt und vermessen werden. Zu diesem Zweck kann das Kraftfahrzeug beispielsweise bewegt werden, während ein Umgebungsbereich des Kraftfahrzeugs mittels der Sensoreinrichtung insbesondere kontinuierlich erfasst wird. Die fahrzeugseitige Sensoreinrichtung kann beispielsweise ein Ultraschallsensor und/oder eine Kamera und/oder ein Laserscanner sein. Insbesondere kann mit der fahrzeugseitigen Sensoreinrichtung auch der Übergang zwischen dem ersten und dem zweiten Bereich der Parklücke, welcher insbesondere als eine Bordsteinkante ausgebildet ist, erkannt werden, und ein Abstand zwischen dem Kraftfahrzeug und dem Übergang erfasst werden.

Der Übergang ist dabei insbesondere derart in der Parklücke angeordnet, dass das Kraftfahrzeug nach Beendigung des Einparkvorgangs in einer Parkstellung zumindest teilweise auf dem zweiten Bereich platziert beziehungsweise positioniert ist. Insbesondere muss dazu der Übergang während des Einparkens von zumindest einem Rad des Kraftfahrzeugs überfahren beziehungsweise überwunden werden. Für den Einparkvorgang des Kraftfahrzeugs in die Parklücke kann beispielsweise eine Parktrajektorie bestimmt werden, entlang welcher sich das Kraftfahrzeug während des Einparkens zumindest semi-autonom bewegt. Die Parktrajektorie wird dabei beispielsweise ausgehend von dem Kraftfahrzeug durch den ersten Bereich hindurch führend, den Übergang kreuzend und in den zweiten Bereich führend bestimmt. Während des Einparkens wird das zumindest eine Rad entlang der Parktrajektorie und damit über den Übergang bewegt. Zum Überwinden des Übergangs, welcher ein Hindernis für das zumindest eine Rad darstellt, muss dafür insbesondere ein bestimmtes Drehmoment auf das zumindest eine Rad übertragen werden.

Dabei ist es nun vorgesehen, dass dieses für die Überwindung erforderliche Drehmoment vor Beginn der Überwindung, insbesondere zeitlich vor einer Positionierung des zumindest einen Rads an dem Übergang, vorherbestimmt wird. Ein Wert des erforderlichen Drehmoments steht also bereits zur Verfügung, während das zumindest eine Rad noch beabstandet zu dem Übergang angeordnet ist. Das erforderliche Drehmoment wird dabei in Abhängigkeit von zumindest einer Kenngröße der Parklücke, insbesondere einer Kenngröße des Übergangs, und/oder einer Kenngröße des Kraftfahrzeugs vorhergesagt beziehungsweise im Voraus bestimmt. Das erforderliche Drehmoment kann beispielsweise von einer Steuereinrichtung des Fahrerassistenzsystems bestimmt werden.

Durch die Vorbestimmung des Drehmoments in Abhängigkeit von dem Parameter der Parklücke und/oder des Kraftfahrzeugs ergibt sich der Vorteil, dass das Drehmoment individuell vorgegeben werden kann und bereits vor Beginn des Überwindungsvorgangs zur Verfügung steht. Das Drehmoment kann dabei so bestimmt werden, dass es einen minimalen, für die Überwindung erforderlichen Wert aufweist. Dadurch kann ein besonders angenehmer Einparkvorgang für den Fahrer des Kraftfahrzeugs bereitgestellt werden, da verhindert wird, dass das Kraftfahrzeug aufgrund eines zu hohen Drehmoments ruckartig abgebremst werden muss, um beispielsweise eine Kollision mit einem die Parklücke begrenzenden Objekt zu verhindern.

Dabei werden vorgegebenen Werten des zumindest einen Parameters jeweilige Gewichtungsfaktoren zugeordnet, wobei einer der Gewichtungsfaktoren in Abhängigkeit von dem bestimmten Wert des zumindest einen Parameters ausgewählt wird, ein vorgegebenes Standarddrehmoment mit dem ausgewählten Gewichtungsfaktor gewichtet wird und das gewichtete Standarddrehmoment als das für den Überwindungsvorgang erforderliche Drehmoment vorherbestimmt wird. Das Standarddrehmoment kann während eines Testeinparkvorgangs bestimmt werden und in einer fahrzeugseitigen Speichereinrichtung hinterlegt werden. Das Standarddrehmoment ist dabei insbesondere dasjenige Minimaldrehmoment, welches bei Vorliegen zumindest eines vorbestimmten Standardparameters, beispielsweise einer Standardhöhe des Übergangs, auf das zumindest eine Rad übertragen werden muss, sodass der Übergang erfolgreich überwunden werden kann. Der Standardparameter ist insbesondere ein Durchschnittswert, welcher aus Statistiken erhalten werden kann. Wenn der bestimmte, beispielsweise von der Sensoreinrichtung erfasste, Parameter dem Standardparameter entspricht, so beträgt der Gewichtungsfaktor für diesen Parameter eins und das erforderliche Drehmoment wird als das Standarddrehmoment vorgegeben. Wenn der bestimmte Parameter von dem Standardparameter abweicht, so beträgt der Gewichtungsfaktor für diesen Parameter einen von eins abweichenden Wert, mit welchem das Standarddrehmoment gewichtet beziehungsweise multipliziert wird. Das Standarddrehmoment, welches beispielsweise 250 Nm betragen kann, wird mittels des Gewichtungsfaktors dann verringert oder erhöht. Wenn beispielsweise die erfasste Höhe des Bordsteins geringer als die Standardhöhe ist, so ist der Gewichtungsfaktor kleiner als eins, wenn die erfasste Höhe des Bordsteins größer als die Standardhöhe ist, so ist der Gewichtungsfaktor größer als eins. Durch das Bereitstellen von vorbestimmten Gewichtungsfaktoren sowie durch Vorgeben des Standarddrehmoments kann das erforderliche Drehmoment besonders einfach und schnell bestimmt werden.
In einer Weiterbildung der Erfindung wird als der zumindest eine Parameter eine Höhe und/oder einer Neigung des Übergangs bestimmt. Die Höhe und/oder die Neigung des Übergangs beziehungsweise der Bordsteinkante kann beispielsweise mittels der fahrzeugseitigen Sensoreinrichtung, beispielsweise der Kamera und/oder des Ultraschallsensors erfasst werden. Die Neigung kann als ein Winkel des Übergangs bezüglich des ersten Bereiches bestimmt werden. In Abhängigkeit von der erfassten Höhe und/oder der erfassten Neigung bezüglich des ersten Bereiches kann dann das erforderliche Drehmoment für den Überwindungsvorgang bestimmt werden. So kann beispielsweise bei einem Übergang mit einer ersten Höhe ein erster Wert für das Drehmoment bestimmt werden, und bei einem Übergang mit einer im Vergleich zur ersten Höhe kleineren zweiten Höhe ein im Vergleich zum ersten Wert reduzierter zweiter Wert für das Drehmoment vorgegeben werden.

Des Weiteren kann vorgesehen sein, dass als der zumindest eine Parameter eine Anzahl an durch das Kraftfahrzeug bereits durchgeführten, erfolglosen Versuchen zur Überwindung des Übergangs bestimmt wird. Dazu kann nach jedem Überwindungsversuch die Überwindung als erfolgreich oder als fehlgeschlagen bewertet werden. Die Überwindung wird dann als fehlgeschlagen bewertet, wenn sich nach dem Überwindungsversuch das Rad, insbesondere eine Reifenaufstandsfläche des Rades, in dem ersten Bereich der Parklücke befindet. Die Überwindung wird dann als erfolgreich bewertet, wenn sich nach dem Überwindungsversuch die Reifenaufstandsfläche in dem zweiten Bereich der Parklücke befindet. Ein Versuch kann beispielsweise fehlschlagen, wenn das Drehmoment nicht ausreichend zur vollständigen Überwindung des Übergangs war. Dann kann für einen weiteren Versuch das Drehmoment erhöht werden. Mit steigender Anzahl an bereits erfolglos durchgeführten Überwindungsversuchen beziehungsweise Fehlversuchen kann der Wert für das Drehmoment erhöht werden.

In einer weiteren Ausführungsform wird als der zumindest eine Parameter eine Orientierung des Kraftfahrzeugs bezüglich der Parklücke bestimmt. Anhand der Orientierung kann insbesondere bestimmt werden, ob das Kraftfahrzeug einen Längsparkvorgang oder einen Querparkvorgang durchführt und/oder ob das Kraftfahrzeug vorwärts oder rückwärts in die Parklücke einparkt. Bei einem Längsparkvorgang schneidet die Parktrajektorie den Übergang unter einem anderen Winkel als bei einem Querparkvorgang. Das Drehmoment wird zum Bereitstellen eines erfolgreichen Überwindungsvorgangs also in Abhängigkeit von der Orientierung, insbesondere dem Winkel zwischen dem Übergang und Parktrajektorie, bestimmt.

Alternativ oder zusätzlich kann als der zumindest eine Parameter eine Anzahl an den Übergang zu überwindenden Rädern des Kraftfahrzeugs bestimmt werden. Beim Längsparken werden während des Einparkens die Räder einer Seite des Kraftfahrzeugs, beispielsweise einer Beifahrerseite des Kraftfahrzeugs, nacheinander über den Übergang bewegt. Beim Querparken werden die Räder einer Achse, beispielsweise beide Räder der Vorderachse oder beide Räder der Hinterachse, gleichzeitig über den Übergang bewegt. Durch das Berücksichtigen der Anzahl an Rädern, welche auf dem zweiten Bereich positioniert werden sollen, kann somit in vorteilhafter Weise das erforderliche Drehmoment für die Überwindung des Übergangs besonders genau bestimmt werden.

Dabei kann vorgesehen sein, dass die vorgegebenen Werte des zumindest einen Parameters und die zugeordneten Gewichtungsfaktoren in einer Umsetzungstabelle hinterlegt werden und einer der hinterlegten Gewichtungsfaktoren in Abhängigkeit von dem bestimmten Wert des zumindest einen Parameters ausgelesen wird. Die Umsetzungstabelle beziehungsweise Lookup-Tabelle (LUT) kann beispielsweise in der fahrzeugseitigen Speichereinrichtung hinterlegt sein, wobei beispielsweise für jeden Parameter eine Umsetzungstabelle hinterlegt sein kann. Die Speichereinrichtung kann beispielsweise durch die Steuereinrichtung des Fahrerassistenzsystems ausgelesen werden. Durch das Hinterlegen der Werte in der Umsetzungstabelle können aufwendige Bestimmungen beziehungsweise Berechnungen des Drehmomentes vermieden werden.

Vorzugsweise wird das zumindest eine Rad des Kraftfahrzeugs zu Beginn der Überwindung in einem vorgegebenen Abstand in dem ersten Bereich zu dem Übergang positioniert. Das vorherbestimmte Drehmoment wird zum Aufbauen des für die Überwindung erforderlichen Drehmoments auf das in dem vorgegebenen Abstand positionierte Rad übertragen. Insbesondere wird als der vorgegebene Abstand ein Wert zwischen einschließlich 5 cm und einschließlich 20 cm, insbesondere zwischen 10 cm und 15 cm, vorgegeben. Durch das Positionieren des Rads an einer vorbestimmten Position relativ zu dem Übergang beziehungsweise in dem vorbestimmten Abstand kann sich das Drehmoment über die Distanz aufbauen, welche das zumindest eine Rad ausgehend von der vorbestimmten Position bis zu dem Übergang zurücklegt. Somit steht das erforderliche, vorherbestimmte Drehmoment in voller Höhe bereit, wenn das zumindest eine Rad an dem Übergang ansteht und mit dem Überwindungsvorgang beginnt. Das Drehmoment wird also nicht erst dann aufgebaut, wenn das Rad mit dem Überwindungsvorgang beginnt, sonders bereits ab dem vorbestimmten Abstand. Somit kann der Übergang zuverlässig von dem zumindest einen Rad überwunden werden.

In einer Weiterbildung der Erfindung wird mittels einer Sensoreinrichtung des Kraftfahrzeugs während des Einparkens ein Abstand zwischen dem zumindest einen Rad des Kraftfahrzeugs und dem Übergang erfasst und das Kraftfahrzeug abgebremst, sobald der erfasste Abstand dem vorgegebenen Abstand entspricht. Die Sensoreinrichtung kann beispielsweise kontinuierlich während des Einparkens den Abstand zwischen dem zumindest einen Rad und dem Übergang erfassen und mit dem vorbestimmten Abstand vergleichen. Sobald sich das zumindest eine Rad in dem vorbestimmten Abstand zu dem Übergang befindet, wird das Kraftfahrzeug abgebremst. Durch das Abbremsen des Kraftfahrzeugs und das Übertragen des Drehmoments auf das zumindest eine Rad, welches sich in dem vorbestimmten Abstand befindet, kann der Fahrer in vorteilhafter Weise auf den bevorstehenden Überwindungsvorgang vorbereitet werden.

Auch kann vorgesehen sein, dass mittels einer Sensoreinrichtung des Kraftfahrzeugs bei Beginn des zumindest semi-autonomen Einparkens ein Initialabstand zwischen dem zumindest einen Rad des Kraftfahrzeugs und dem Übergang erfasst wird, anhand von Odometrieparametern des Kraftfahrzeugs und der Initialposition ein Abstand zwischen dem zumindest einen Rad und dem Übergang während des Einparkens bestimmt wird und das Kraftfahrzeug abgebremst wird, sobald der bestimmte Abstand dem vorgegebenen Abstand entspricht. Gemäß dieser Ausführungsform wird die Position des Kraftfahrzeugs zu dem Übergang beispielsweise nur einmalig erfasst. Dazu kann von der Sensoreinrichtung eine Initialposition des Kraftfahrzeugs erfasst werden, ausgehend von welcher beispielsweise die Parktrajektorie für den zumindest semi-autonomen Einparkvorgang bestimmt wird. Die Parktrajektorie umfasst dabei die vorbestimmte Position relativ zu dem Übergang, an welcher das zumindest eine Rad zum Aufbauen des Drehmoments positioniert werden soll. Während das Kraftfahrzeug sich entlang der Parktrajektorie bewegt, kann anhand von Odometrieparametern des Kraftfahrzeugs, insbesondere anhand von Radumdrehungen des zumindest einen Rades, die entlang der Parktrajektorie zurückgelegte Strecke erfasst werden und das Kraftfahrzeug abgebremst werden, sobald sich das Rad an der vorbestimmten Position befindet. Anhand der Odoemtrieparameter kann also das Kraftfahrzeug auch dann bezüglich des Übergangs lokalisiert werden, wenn sich der Übergang nicht mehr in einem Erfassungsbereich der Sensoreinrichtung befindet.

Insbesondere wird der Abstand zwischen dem Kraftfahrzeug und dem Übergang mittels eines Ultraschallsensors und/oder einer Kamera und/oder eines Laserscanners als die zumindest eine Sensoreinrichtung erfasst.

Die Erfindung betrifft außerdem ein Fahrerassistenzsystem für ein Kraftfahrzeug zum zumindest semi-autonomen Einparken des Kraftfahrzeugs in eine Parklücke aufweisend einen ersten Bereich und einen gegenüber dem ersten Bereich erhöhten zweiten Bereich, wobei das Fahrerassistenzsystem zum Durchführen eines erfindungsgemäßen Verfahrens ausgelegt ist. Das Fahrerassistenzsystem weist zum Durchführen des Verfahrens insbesondere eine Steuereinrichtung auf, welche insbesondere auch dazu ausgelegt ist, in eine Lenkung sowie insbesondere in ein Antriebs- und Bremssystem des Kraftfahrzeugs einzugreifen und damit das Kraftfahrzeug zumindest semi-autonom zu bewegen. Außerdem weist das Fahrerassistenzsystem vorzugsweise zumindest eine Sensoreinrichtung, beispielsweise zumindest einen Ultraschallsensor und/oder zumindest eine Kamera und/oder zumindest einen Laserscanner, zum Erfassen der Parklücke und zum Bestimmen eines Abstands zwischen dem Kraftfahrzeug und dem Übergang in der Parklücke auf.

Ein erfindungsgemäßes Kraftfahrzeug umfasst ein erfindungsgemäßes Fahrerassistenzsystem. Das Kraftfahrzeug ist insbesondere als ein Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Mit Angaben "über", "auf", "unter", "oberhalb", "vorwärts", "rückwärts", etc. sind für einen vor dem Kraftfahrzeug stehenden und in Längsrichtung des Kraftfahrzeugs blickenden Beobachter gegebene Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs und eine Parklücke; und
- Fig. 2: eine schematische Darstellung eines Kraftfahrzeugs beim Einparken in eine Parklücke.

In den Figuren sind gleiche sowie funktionsgleiche Elemente mit den gleichen Bezugszeichen versehen.

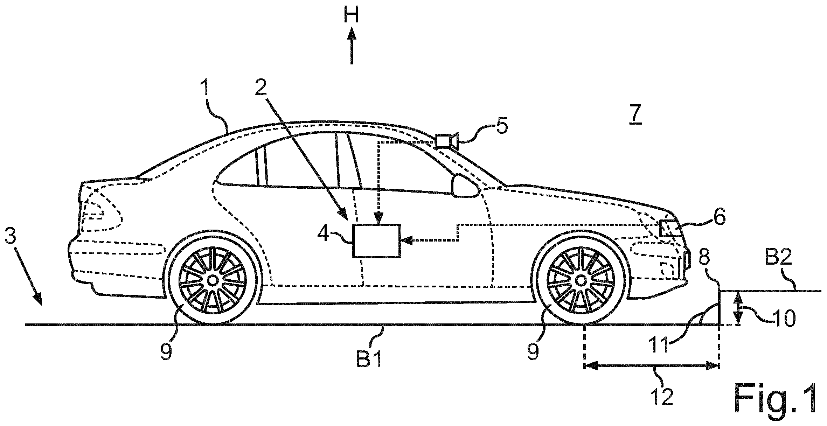

Fig. 1 zeigt ein Kraftfahrzeug 1 gemäß der vorliegenden Erfindung. Das Kraftfahrzeug 1 ist im vorliegenden Fall als ein Personenkraftwagen ausgebildet. Das Kraftfahrzeug 1 umfasst ein Fahrerassistenzsystem 2, welches einen Fahrer des Kraftfahrzeugs 1 beim zumindest semi-autonomen Einparken in eine Parklücke 3 unterstützt. Das Fahrerassistenzsystem 2 weist hier eine Steuereinrichtung 4 auf, welche beispielsweise durch ein fahrzeugseitiges Steuergerät ausgebildet sein kann. Die Steuereinrichtung 4 ist insbesondere dazu ausgelegt, zum Bereitstellen eines semi-autonomen Einparkvorgangs in eine Lenkung des Kraftfahrzeugs 1 einzugreifen und zum Bereitstellen eines vollautonomen Einparkvorgangs zusätzlich ein Gaspedal und eine Bremse des Kraftfahrzeugs 1 zu betätigen. Das Fahrerassistenzsystem 2 weist hier außerdem zumindest eine Sensoreinrichtung 5, 6 auf, welche zum Überwachen eines Umgebungsbereichs 7 des Kraftfahrzeugs 1 ausgebildet ist. Hier weist das Fahrerassistenzsystem 2 zwei Sensoreinrichtungen 5, 6 auf, wobei eine erste Sensoreinrichtung 5 beispielsweise als eine Kamera ausgebildet ist und eine zweite Sensoreinrichtung 6 beispielsweise als ein Ultraschallsensor ausgebildet ist.

Mittels der fahrzeugseitigen Sensoreinrichtungen 5, 6 kann die Parklücke 3, beispielsweise bei einer Fahrt des Kraftfahrzeugs 1 in Richtung der Parklücke 3, erfasst und vermessen werden. Die Parklücke 3 weist einen ersten Bereich B1 und einen gegenüber dem ersten Bereich B1 erhabenen beziehungsweise erhöhten zweiten Bereich B2 auf. Der zweite Bereich B2 ist also entlang einer Fahrzeughochrichtung H oberhalb des ersten Bereiches B1 angeordnet. Die Bereiche B1, B2 sind durch einen Übergang 8 voneinander getrennt, welcher insbesondere durch eine Borsteinkante ausgebildet ist. Im vorliegenden Fall ist die Parklücke 3 als eine Querparklücke ausgebildet, in welche das Kraftfahrzeug 1 hier zumindest semi-autonom vorwärts einparkt. Der Übergang 8 ist dabei derart in der Parklücke 3 angeordnet, dass das Kraftfahrzeug 1 in einer Parkstellung zumindest teilweise in dem zweiten Bereich B2 positioniert ist. Anders ausgedrückt ist in der Parkstellung zumindest ein Rad 9 des Kraftfahrzeugs 1 auf dem zweiten Bereich B2 angeordnet. Insbesondere muss dazu während des zumindest semi-autonomen Einparkvorgangs in die Parklücke 3 der Übergang 8 von dem zumindest einen Rad 9 des Kraftfahrzeugs 1, hier zumindest von beiden Vorderrädern des Kraftfahrzeugs 1, überfahren und überwunden werden. Zur Überfahrt des Übergangs 8 wird ein Drehmoment, beispielsweise von der Steuereinrichtung 4, auf das zumindest eine Rad 9 übertragen.

Dabei ist es vorgesehen, dass das Drehmoment in Abhängigkeit von zumindest einem Parameter der Parklücke 3 und/oder des Kraftfahrzeugs 1 vorherbestimmt wird. Das Drehmoment wird also bestimmt, bevor das Kraftfahrzeug 1 mit der Überwindung des Übergangs 8 beginnt. Als der zumindest eine Parameter kann dabei eine Höhe 10 und/oder eine Neigung 11 des Übergangs 8 bezüglich des ersten Bereichs B1 bestimmt werden. Die Höhe 10 und oder die Neigung 11 kann beispielsweise mittels der Sensoreinrichtungen 5, 6 bestimmt werden. Auch kann als der zumindest eine Parameter eine Anzahl an Rädern 9 des Kraftfahrzeugs 1 bestimmt werden, durch welche der Übergang 8 überwunden werden soll, also eine Anzahl an Rädern 9, welche auf dem zweiten Bereich B2 platziert werden soll. Außerdem kann als der zumindest eine Parameter eine Anzahl an durch das zumindest eine Rad 9 bereits durchgeführten, fehlgeschlagenen Versuchen zur Überwindung des Übergangs 8 bestimmt werden.

Dabei können vorgegebenen Werten des zumindest einen Parameters vorgegebene Gewichtungsfaktoren zugeordnet werden. Ein vorbestimmtes Standarddrehmoment, welches beispielsweise 250 Nm beträgt, kann dann mit einem der Gewichtungsfaktoren, welcher in Abhängigkeit von dem erfassten Wert des zumindest einen Parameters ausgewählt wird, gewichtet werden, wobei das gewichtete Standarddrehmoment als das Drehmoment vorherbestimmt wird. Die vorgegebenen Werte für die Parameter können mit den zugehörigen Gewichtungsfaktoren in jeweiligen Umsetzungstabellen hinterlegt sein. Dazu wird, beispielsweise von der Steuereinrichtung 4, in der Umsetzungstabelle derjenige Wert für den Parameter identifiziert, welcher dem erfassten Wert entspricht, und der zugeordnete Gewichtungsfaktor aus der Umsetzungstabelle ausgelesen.

So kann beispielsweise einem ersten vorgegebenen Wert für die Höhe 10 des Übergangs 8 von 11 cm der Gewichtungsfaktor "0,6", einem zweiten vorgegebenen Wert für die Höhe 10 des Übergangs 8 von 13 cm der Gewichtungsfaktor "0,8", einem dritten vorgegebenen Wert für die Höhe 10 des Übergangs 8 von 15 cm der Gewichtungsfaktor "1" und einem vierten vorgegebenen Wert für die Höhe 10 des Übergangs 8 von 17 cm der Gewichtungsfaktor "1,2" zugeordnet sein.

Einem ersten vorgegebenen Wert für die Neigung 11 des Übergangs 8 von 75°kann der Gewichtungsfaktor "0,8", einem zweiten vorgegebenen Wert für die Neigung 11 des Übergangs 8 von 90°kann der Gewichtungsfaktor "1" und einem dritten vorgegebenen Wert für die Neigung 11 des Übergangs 8 von 100°ka nn der Gewichtungsfaktor "1,2" zugeordnet sein.

Einem ersten vorgegebenen Wert für die Anzahl an bereits erfolglos durchgeführten Versuchen zur Überwindung des Übergangs 8 von "0" kann der Gewichtungsfaktor "1", einem zweiten vorgegebenen Wert für die Anzahl an bereits erfolglos durchgeführten Versuchen zur Überwindung des Übergangs 8 von "1" kann der Gewichtungsfaktor "1,2", einem dritten vorgegebenen Wert für die Anzahl an bereits erfolglos durchgeführten Versuchen zur Überwindung des Übergangs 8 von "2" kann der Gewichtungsfaktor "1,7" und einem vierten vorgegebenen Wert für die Anzahl an bereits erfolglos durchgeführten Versuchen zur Überwindung des Übergangs 8 von "3" kann der Gewichtungsfaktor "2" zugeordnet werden.

Einem ersten vorgegebenen Wert für die Anzahl an den Übergang 8 zu überwindenden Rädern 9 von "1" kann der Gewichtungsfaktor "1", einem zweiten vorgegebenen Wert für die Anzahl an den Übergang 8 zu überwindenden Rädern 9 von "2" kann der Gewichtungsfaktor "1,4" und einem dritten vorgegebenen Wert für die Anzahl an den Übergang 8 zu überwindenden Rädern von "3" kann der Gewichtungsfaktor "2" zugeordnet werden.

Wenn genau ein Rad 9 einen Übergang 8 mit 15 cm Höhe 10 und einer Neigung 11 von 90 cm überwinden soll und der Überwindungsvorgang noch nicht fehlgeschlagen ist, also die Anzahl an Versuch "0" beträgt, so beträgt das erforderliche Drehmoment 250 Nm*1*1*1*1= 250 Nm.

Außerdem kann das Kraftfahrzeug 1 mit dem zumindest einen Rad 9 in einem vorbestimmten Abstand 12 in dem ersten Bereich B1 relativ zu dem Übergang 8 positioniert werden. Der vorbestimmte Abstand 12 kann beispielsweise zwischen 10 cm und 15 cm betragen. Dann wird das vorherbestimmte Drehmoment auf das zumindest eine Rad 9 übertragen, welches in dem vorbestimmten Abstand 12 positioniert ist, und das Kraftfahrzeug 1 zumindest semi-autonom in Richtung des Übergangs 8 bewegt. Während das zumindest eine Rad 9 die durch den Abstand 12 vorgegebene Strecke bis zu dem Übergang 8 zurücklegt, kann sich somit in vorteilhafter Weise das Drehmoment aufbauen, sodass das erforderliche Drehmoment mit dem vorherbestimmten Wert zur Verfügung steht, sobald das Rad 9 an dem Übergang 8 positioniert ist und mit dem Überwindungsvorgang beginnt. Somit kann der Übergang 8 zuverlässig von dem zumindest einen Rad 9 überwunden werden.

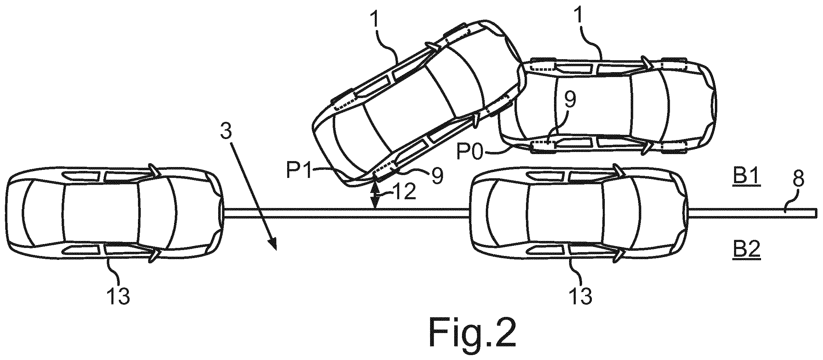

In Fig. 2 ist das Kraftfahrzeug 1 beim Einparken in eine als Längsparklücke ausgebildete Parklücke 3 gezeigt, welche durch zwei Objekte 13 in Form von zwei anderen Fahrzeugen begrenzt wird. Bei Beginn des Einparkvorgangs befindet sich das zumindest eine Rad 9 an einer Initialposition P0, diese Initialposition P0 kann beispielsweise von der Sensoreinrichtung 5, 6 erfasst werden. Durch Bewegung des Kraftfahrzeugs 1 in Richtung des Übergangs 8 befindet sich das zumindest eine Rad 9 an einer Position P1, welche sich in dem vorbestimmten Abstand 12 zu dem Übergang 8 befindet. Das Kraftfahrzeug 1 wird angehalten, beispielsweise automatisch abgebremst, und das vorherbestimmte Drehmoment auf das zumindest eine, sich an der Position P1 befindliche Rad 9 übertragen. Die Position P1 des zumindest einen Rads 9 relativ zum Übergang 8 kann ebenfalls von der Sensoreinrichtung 5, 6 erfasst werden und/oder anhand von der Initialposition und Odometrieparametern des Kraftfahrzeugs 1, beispielsweise Radumdrehungen des zumindest einen Rads 9, bestimmt werden. Durch Abbremsen des Kraftfahrzeugs 1 an der Position P1 in dem vorbestimmten Abstand 12 kann der Fahrer des Kraftfahrzeugs 1 auf den bevorstehenden Überwindungsvorgang des Übergangs 8 vorbereitet werden.

## Patentansprüche

1. Verfahren zum zumindest semi-autonomen Einparken eines Kraftfahrzeugs (1) in eine Parklücke (3) aufweisend einen ersten Bereich (B1) und einen gegenüber dem ersten Bereich (B1) erhöhten zweiten Bereich (B2), wobei bei dem Verfahren zur Überwindung eines Übergangs (8) zwischen dem ersten Bereich (B1) und dem zweiten Bereich (B2) durch zumindest ein Rad (9) des Kraftfahrzeugs (1) während des Einparkens ein Drehmoment auf das zumindest eine Rad (9) übertragen wird, wobei
das für die Überwindung des Übergangs (8) erforderliche Drehmoment in Abhängigkeit von zumindest einem die Parklücke (3) und/oder das Kraftfahrzeug (1) charakterisierenden Parameter vor einem Beginn der Überwindung vorherbestimmt wird,
**dadurch gekennzeichnet, dass**
vorgegebenen Werten des zumindest einen Parameters jeweilige Gewichtungsfaktoren zugeordnet werden, wobei einer der Gewichtungsfaktoren in Abhängigkeit von dem bestimmten Wert des zumindest einen Parameters ausgewählt wird, ein vorgegebenes Standarddrehmoment mit dem ausgewählten Gewichtungsfaktor gewichtet wird und das gewichtete Standarddrehmoment als das für den Überwindungsvorgang erforderliche Drehmoment vorherbestimmt wird.

2. Verfahren nach Anspruch 1,
**dadurch gekennzeichnet, dass**
als der zumindest eine Parameter eine Höhe (10) und/oder einer Neigung (11) des Übergangs (8) bezüglich des ersten Bereiches (B1) bestimmt wird.

3. Verfahren nach Anspruch 1 oder 2,
**dadurch gekennzeichnet, dass**
als der zumindest eine Parameter eine Anzahl an durch das Kraftfahrzeug (1) bereits durchgeführten, erfolglosen Versuchen zur Überwindung des Übergangs (8) bestimmt wird.

4. Verfahren nach einem der vorhergehenden Ansprüche,
**dadurch gekennzeichnet, dass**
als der zumindest eine Parameter eine Orientierung des Kraftfahrzeugs (1) bezüglich der Parklücke (3) bestimmt wird.

5. Verfahren nach einem der vorhergehenden Ansprüche,
**dadurch gekennzeichnet, dass**
als der zumindest eine Parameter eine Anzahl an den Übergang (8) zu überwindenden Rädern (9) des Kraftfahrzeugs (1) bestimmt wird.

6. Verfahren nach Anspruch 1,
**dadurch gekennzeichnet, dass**
die vorgegebenen Werte des zumindest einen Parameters und die zugeordneten Gewichtungsfaktoren in einer Umsetzungstabelle hinterlegt werden und einer der hinterlegten Gewichtungsfaktoren in Abhängigkeit von dem bestimmten Wert des zumindest einen Parameters ausgelesen wird.

7. Verfahren nach einem der vorhergehenden Ansprüche,
**dadurch gekennzeichnet, dass**
das zumindest eine Rad (9) des Kraftfahrzeugs (1) zu Beginn der Überwindung in einem vorgegebenen Abstand (12) in dem ersten Bereich (B1) zu dem Übergang (8) positioniert wird und das vorherbestimmte Drehmoment zum Aufbauen des für die Überwindung erforderlichen Drehmoments auf das in dem vorgegebenen Abstand (13) positionierte Rad (9) übertragen wird.

8. Verfahren nach Anspruch 7,
**dadurch gekennzeichnet, dass**
als der vorgegebene Abstand (12) ein Wert zwischen einschließlich 5 cm und einschließlich 20 cm, insbesondere zwischen 10 cm und 15 cm, vorgegeben wird.

9. Verfahren nach Anspruch 7 oder 8,
**dadurch gekennzeichnet, dass**
mittels einer Sensoreinrichtung (5, 6) des Kraftfahrzeugs während des Einparkens ein Abstand zwischen dem zumindest einen Rad des Kraftfahrzeugs und dem Übergang erfasst wird und das Kraftfahrzeug abgebremst wird, sobald der erfasste Abstand dem vorgegebenen Abstand entspricht.

10. Verfahren nach einem der Ansprüche 7 bis 9,
**dadurch gekennzeichnet, dass**
mittels einer Sensoreinrichtung des Kraftfahrzeugs bei Beginn des zumindest semi-autonomen Einparkens ein Initialabstand zwischen dem zumindest einen Rad des Kraftfahrzeugs und dem Übergang erfasst wird, anhand von Odometrieparametern des Kraftfahrzeugs und der Initialposition während des Einparkens ein Abstand zwischen dem zumindest einen Rad und dem Übergang bestimmt wird und das Kraftfahrzeug abgebremst wird, sobald der bestimmte Abstand dem vorgegebenen Abstand entspricht.

11. Verfahren nach Anspruch 9 oder 10,
**dadurch gekennzeichnet, dass**
der Abstand zwischen dem Kraftfahrzeug und dem Übergang mittels eines Ultraschallsensors und/oder einer Kamera und/oder eines Laserscanners als die zumindest eine Sensoreinrichtung erfasst wird.

12. Fahrerassistenzsystem (2) für ein Kraftfahrzeug (1) zum zumindest semi-autonomen Einparken des Kraftfahrzeugs (1) in eine Parklücke (3) aufweisend einen ersten Bereich (B1) und einen gegenüber dem ersten Bereich (B1) erhöhten zweiten Bereich (B2), wobei das Fahrerassistenzsystem (2) zum Durchführen eines Verfahrens nach einem der vorhergehenden Ansprüche ausgelegt ist.

13. Kraftfahrzeug (1) mit einem Fahrerassistenzsystem (2) nach Anspruch 12.

## Claims

1. Method for at least semi-autonomously parking a motor vehicle (1) in a parking space (3) comprising a first region (B1) and a second region (B2) which is raised compared to the first region (B1), wherein in the method, in order for at least one wheel (9) of the motor vehicle (1) to overcome a junction (8) between the first region (B1) and the second region (B2) during the parking process a torque is transmitted to the at least one wheel (9),
wherein
the torque which is necessary to overcome the junction (8) is determined in advance, before a start of the overcoming process, as a function of at least one parameter which characterizes the parking space (3) and/or the motor vehicle (1),
**characterized in that**
predefined values of the at least one parameter are assigned respective weighting factors, wherein one of the weighting factors is selected as a function of the determined value of the at least one parameter, a predefined standard torque is weighted with the selected weighting factor, and the weighted standard torque is determined in advance as the torque which is necessary for the overcoming process.

2. Method according to Claim 1,
**characterized in that**
a height (10) and/or an inclination (11) of the junction (8) with respect to the first region (B1) is determined as the at least one parameter.

3. Method according to Claim 1 or 2,
**characterized in that**
a number of unsuccessful attempts to overcome the junction (8) which have already been carried out by the motor vehicle (1) is determined as the at least one parameter.

4. Method according to one of the preceding claims,
**characterized in that**
an orientation of the motor vehicle (1) with respect to the parking space (3) is determined as the at least one parameter.

5. Method according to one of the preceding claims,
**characterized in that**
a number of wheels (9) of the motor vehicle (1) which are to overcome the junction (8) is determined as the at least one parameter.

6. Method according to Claim 1,
**characterized in that**
the predefined values of the at least one parameter and the assigned weighting factors are stored in a conversion table, and one of the stored weighting factors is read out as a function of the determined value of the at least one parameter.

7. Method according to one of the preceding claims,
**characterized in that**
the at least one wheel (9) of the motor vehicle (1) is positioned at the start of the overcoming process at a predefined distance (12) in the first region (B1) from the junction (8), and the torque which is determined in advance in order to build up the torque necessary for the overcoming process is transmitted to the wheel (9) which is positioned at the predefined distance (13).

8. Method according to Claim 7,
**characterized in that**
a value between 5 cm and 20 cm inclusive, in particular between 10 cm and 15 cm, is predefined as the predefined distance (12).

9. Method according to Claim 7 or 8,
**characterized in that**
a distance between the at least one wheel of the motor vehicle and the junction is sensed by means of a sensor device (5, 6) of the motor vehicle during the parking process, and the motor vehicle is braked as soon as the sensed distance corresponds to the predefined distance.

10. Method according to one of Claims 7 to 9,
**characterized in that**
at the start of the at least semi-autonomous parking an initial distance between the at least one wheel of the motor vehicle and the junction is sensed by means of a sensor device of the motor vehicle, a distance between the at least one wheel and the junction is determined during the parking process on the basis of odometry parameters of the motor vehicle and the initial position, and the motor vehicle is braked as soon as the determined distance corresponds to the predefined distance.

11. Method according to Claim 9 or 10,
**characterized in that**
the distance between the motor vehicle and the junction is sensed by means of an ultrasonic sensor and/or a camera and/or a laser scanner as the at least one sensor device.

12. Driver assistance system (2) for a motor vehicle (1) for at least semi-autonomously parking the motor vehicle (1) in a parking space (3) comprising a first region (B1) and a second region (B2) which is raised in comparison with the first region (B1), wherein the driver assistance system (2) is configured to carry out a method according to one of the preceding claims.

13. Motor vehicle (1) having a driver assistance system (2) according to Claim 12.

## Revendications

1. Procédé de stationnement au moins semi-autonome d'un véhicule automobile (1) dans une place de stationnement (3) comprenant une première zone (B1) et une deuxième zone (B2) surélevée par rapport à la première zone (B1), un couple étant transmis à l'au moins une roue (9) lors de la procédure permettant de surmonter l'obstacle constitué par une transition (8) entre la première zone (B1) et la deuxième zone (B2) par au moins une roue (9) du véhicule automobile (1) pendant le stationnement,
le couple nécessaire pour surmonter la transition (8) étant déterminé à l'avance en fonction d'au moins un paramètre caractérisant la place de stationnement (3) et/ou le véhicule automobile (1) avant de surmonter ledit obstacle,
**caractérisé en ce que**
des valeurs définies d'au moins un paramètre sont associées à des facteurs de pondération respectifs, l'un des facteurs de pondération étant sélectionné en fonction de la valeur déterminée de l'au moins un paramètre, un couple standard prédéterminé étant pondéré avec le facteur de pondération sélectionné, et le couple standard pondéré étant prédéterminé comme couple nécessaire pour surmonter l'obstacle.

2. Procédé selon la revendication 1, **caractérisé en ce que**
l'au moins paramètre est une hauteur (10) et/ou une inclinaison (11) de la transition (8) par rapport à la première zone (B1).

3. Procédé selon la revendication 1 ou 2, **caractérisé en ce que**
l'au moins un paramètre est un nombre de tentatives infructueuses déjà effectuées par le véhicule automobile (1) pour surmonter l'obstacle constitué par la transition (8).

4. Procédé selon l'une des revendications précédentes,
**caractérisé en ce que**
l'au moins un paramètre est une orientation du véhicule automobile (1) par rapport à la place de stationnement (3) .

5. Procédé selon l'une des revendications précédentes,
**caractérisé en ce que**
l'au moins un paramètre est le nombre de roues (9) du véhicule automobile (1) qui doivent surmonter l'obstacle constitué par la transition (8).

6. Procédé selon la revendication 1,
**caractérisé en ce que**
les valeurs définies de l'au moins un paramètre et les facteurs de pondération associés sont mémorisés dans une table de conversion et l'un des facteurs de pondération mémorisés est lu en fonction de la valeur déterminée de l'au moins un paramètre.

7. Procédé selon l'une des revendications précédentes,
**caractérisé en ce que**
l'au moins une roue (9) du véhicule automobile (1) est positionnée au début de la transition à une distance définie (12) de la transition (8) dans la première zone (B1) et le couple prédéterminé est transmis à la roue (9), positionnée à la distance définie (13), pour établir le couple nécessaire pour surmonter l'obstacle.

8. Procédé selon la revendication 7,
**caractérisé en ce que**
la distance définie (12) est une valeur comprise entre 5 cm inclus et 20 cm inclus, en particulier entre 10 cm et 15 cm.

9. Procédé selon la revendication 7 ou 8,
**caractérisé en ce qu'**
une distance entre l'au moins une roue du véhicule automobile et la transition est détectée pendant le stationnement au moyen d'un dispositif de détection (5, 6) du véhicule automobile et le véhicule automobile est décéléré dès que la distance détectée correspond à la distance définie.

10. Procédé selon l'une des revendications 7 à 9,
**caractérisé en ce qu'**
une distance initiale entre l'au moins une roue du véhicule automobile et la transition est détectée au moyen d'un dispositif de détection du véhicule automobile au début du stationnement au moins semi-autonome, une distance entre l'au moins une roue et la transition est déterminée en fonction de paramètres d'odométrie du véhicule automobile et de la position initiale pendant le stationnement et le véhicule automobile est décéléré dès que la distance définie correspond à la distance prédéfinie.

11. Procédé selon la revendication 9 ou 10,
**caractérisé en ce que**
la distance entre le véhicule automobile et la transition est détectée au moyen d'un capteur à ultrasons et/ou d'une caméra et/ou d'un scanner laser servant au moins de dispositif de détection.

12. Système d'aide à la conduite (2) destiné à un véhicule automobile (1) pour stationner de manière au moins semi-autonome le véhicule automobile (1) à une place de stationnement (3) comprenant une première zone (B1) et une deuxième zone (B2) augmentée par rapport à la première zone (B1), le système d'aide à la conduite (2) étant conçu pour mettre en oeuvre un procédé selon l'une des revendications précédentes.

13. Véhicule automobile (1) équipé d'un système d'aide à la conduite (2) selon la revendication 12.
